# EUROPÄISCHE PATENTSCHRIFT

(11) **EP 0 755 132 B1**
(45) Veröffentlichungstag und Bekanntmachung des Hinweises auf die Patenterteilung: **18.06.2003**
(21) Anmeldenummer: 96111383.4
(22) Anmeldetag: 15.07.1996
(51) Int. Cl.: H04B 7/26

(54) **Anordnung zur Synchronisation der Funkübertragung in einem Funkteilnehmeranschlussnetz**
Device for radio transmission synchronisation in a radio subscriber connecting network
Dispositif de synchronisation de transmission radio dans un réseau radio de raccordement d'abonnés

(30) Priorität: 21.07.1995 DE 19526779
(43) Veröffentlichungstag der Anmeldung: 22.01.1997
(73) Patentinhaber: SIEMENS AKTIENGESELLSCHAFT, 80333 München (DE)
(72) Erfinder: Lechner, Robert, Dipl.-Ing., 3171 Böheimkirchen (AT)

(56) Entgegenhaltungen:
- EP-A- 0 522 775
- WO-A-94/08405
- DE-A- 4 215 730
- US-A- 5 365 516
- US-A- 5 367 524

## Beschreibung

Die Erfindung betrifft eine Anordnung zur Synchronisation der Funkübertagung in einem Funkteilnehmeranschlußnetz gemäß dem Oberbegriff des Patentanspruchs 1.

Es handelt sich demnach um die Synchronisation in einem Funkteilnehmeranschlußnetz, das eine zentrale der Steuerung des Funksystems dienende Einheit, zumindest eine dezentrale konzentrierende Einheit, sowie eine Mehrzahl von über eine U-Schnittstelle an diese dezentalen Einheiten angeschlossenen Basisstationen aufweist, zwischen denen und Teilnehmerstationen die Funkübertragung stattfindet.

Bei einem Funkteilnehmeranschlußnetz, das dem DECT-Standard (Digital European Cordless Telecommunication) gehorcht, besteht eine multizellulare Struktur, d.h. jede der Basisstationen bildet das Zentrum einer eigenen Funkzelle, wobei die Ausdehnung dieser Funkzellen und die räumliche Anordnung der Basisstationen so gewählt ist, daß ein Gesamtbereich lückenlos abgedeckt wird. Wenn die einzelnen Basisstationen nicht synchron arbeiten, kommt es an den Grenzen der Funkzellen, an denen Überschneidungen unvermeidlich sind, zu Interferenzen mit der Folge, daß die spektrale Effizienz, d.h. die Möglichkeit der Mehrfachausnutzung ein und derselben Frequenz für verschiedene Verbindungen reduziert wird. Es besteht von daher also ein besonderes Interesse an einer Synchronisierung des Betriebs der Basisstationen.

Gemäß dem DECT-Standard ist ferner vorgesehen, daß die mobilen Endgeräte, die mit den Basisstationen in Funkverbindung stehen, während einer bestehenden Verbindung ständig die Qualität des benutzten Funkkanals und zusätzlich die Qualität aller anderen freien Funkkanäle überprüfen und daß dann, wenn einer der übrigen freien Kanäle eine bessere Qualität als der im Moment benutzte Kanal aufweist, mit Hilfe der Basisstation ein Kanalwechsel veranlaßt wird, der vollkommen unbemerkt vonstatten gehen soll. Ein solches "Handover" kann auch in der Weise stattfinden, daß ein Kanalwechsel von einem Kanal der Funkzelle einer ersten Basisstation zu einem Kanal der Funkzelle einer benachbarten Basisstation stattfindet. Auch im Hinblick auf einen unterbrechungsfreien Übergang in diesem Fall muß vorausgesetzt werden, daß die Basisstationen zeitsynchron arbeiten.

Aus der DE-A-42 15 730 ist ein zellulares, Funkzellen umfassendes Zeitschlitz-Funksystem mit mindestens einer Funkzentrale, mehreren adressierbaren Funkstellen und mehreren adressierbaren Signalempfängern bekannt, bei welchem die Funkzellen im Sendebereich eines Zeitnormals wie beispielsweise eines Satellitensignals (Global Positioning System GPS) liegen und zur Reduktion des Aufwands für die Synchronisierung die von einer Funkzentrale oder Funkstelle ausgesendeten Datentelegramme ein Zeitschlitzkriterium enthalten. Das Zeitschlitzkriterium kennzeichnet den aktuellen Zeitschlitz der sendenden Funkzentrale oder -stelle. Das von den erreichbaren Funkstellen ausgewertete Zeitschlitzkriterium synchronisiert diese Funkstellen, wobei die durch eine Wegadresse des Datentelegramms adressierte Funkstelle die Daten des Datentelegramms zwischenspeichert, ihr eigenes Zeitschlitzkriterium anstelle des Zeitschlitzkriteriums der Funkzentrale einfügt und das neue Datentelegramm in dem ihr zugeordneten Zeitschlitz aussendet. Das Funksystem eignet sich als Funkalarmsystem. Weder eine Fernmeldevermittlungsstelle noch eine aus einer bezüglich des Funkteilnehmeranschlußnetzes zentralen, der Steuerung eines Funksystems dienende Einheit sind vorgesehen.

In der WO-A-94 08405 ist ein Kommunikationssystem beschrieben, welches eine Mobilvermittlungsstelle (Mobile Switching Center) und Basisstationen umfaßt, welche jeweils mit einem Empfänger für Signale des GPS (Global Positioning System) ausgestattet sind. Ein weiteres Zeitsignal wird benutzt zur Synchronisierung der Basisstationen für den Fall, daß das GPS-Signal nicht zur Verfügung steht.

Aus der EP-A-0 522 775 ist eine Anordnung für die Funktelekommunikation bekannt, wobei einerseits eine Mobilvermittlungsstelle (Mobile Switching Center MSC) über ein öffentliches Telefonnetz - ggf. auch mittels eines von einem GPS-Satelliten stammenden Signals - synchronisiert und andererseits Funktelefone und Zellbasisstationen (cell base stations) gegenüber einer anderen Zeit synchronisiert werden. Die Zellbasisstationen empfangen dabei Zeitsignale von GPS-Satelliten.

Nach der US-A-5 367 524 werden in einem Mobilfunkkommunikationssystem mit einer zentralen Steuereinheit (central controller) und einer Vielzahl von Kommunikationseinheiten über jeweils eigene GPS-Signalempfänger Zeitsignale zur Synchronisierung empfangen, um die Kommunikation zwischen der zentralen Steuereinheit und den Kommunikationseinheiten möglichst zu reduzieren.

Aus der US-A-5 365 516 ist ein System zur Lokalisierung in einem Funkdatenkommunikationssystem mit einem auch als Baisstationenkontrolleinheit (Base Station Controller) fungierenden Kontrollzentrum (control center), vernetzten Basisstation, mobilen Transpondern und Mobilstationen bekannt, wobei die Basisstationen bezüglich eines von einer als Hauptbasisstation wirkenden Basisstation erzeugten Zeitsignals synchronisiert werden.

Die Aufgabe der Erfindung besteht nun darin, bei einem Funkteilnehmeranschlußnetz der angegebenen Struktur in effizienter Weise für einen Synchronbetrieb der Basisstationen zu sorgen.

Diese Aufgabe wird mittels der im Kennzeichen des Patentanspruchs 1 angegebenen Merkmalen gelöst.

Es wird demnach von den Bezugssignalen Gebrauch gemacht, die durch Satelliten eines Funkortungssystems, im konkreten Fall des sogenannten GPS-Systems (Global Positioning System) ausgestrahlt werden, indem in den dezentralen Einheiten entsprechende Empfänger angeordnet werden, die aus diesen Bezugssignalen Zeitsignale für die Zeitmultiplex-Funkrahmen der Basisstation ableiten und diese über die jeweilige U-Schnittstelle an die Basisstationen senden.

Da die Entfernungen der Basisstationen von der dezentralen Einheit, an die sie angeschlossen sind, unterschiedlich sind, müssen Laufzeitdifferenzen berücksichtigt werden, was erfindungsgemäß dadurch geschieht, daß die erwähnte in den dezentralen Einheiten enthaltenen Empfänger eine Anpaßschaltung aufweisen, durch die zur Berücksichtigung der jeweiligen Laufzeit ein entsprechendes Zeit-Offset für den Startzeitpunkt des betreffenden Zeitmultiplex-Funkrahmens in einer Grobeinstellung festgelegt wird, und daß die Basisstationen jeweils eine Anpaßschaltung für die Feineinstellung des jeweiligen Zeit-Offsets aufweisen.

Gemäß einer durch den Unteranspruch 4 gekennzeichneten weiteren Ausbildung der Erfindung leiten die Empfänger der dezentralen Einrichtungen aus dem empfangenen Bezugssignal des Funkortungssystems auch Zeitsignale für die in ihnen enthaltenen Baugruppen ab, wodurch sich die technische Realisierung dieser dezentralen Einrichtungen vereinfacht.

Nachstehend wird die Erfindung anhand eines Ausführungsbeispiels unter Bezugnahme auf eine Zeichnung näher erläutert.

In der Zeichnung zeigen:
Figur 1 eine Übersichtdarstellung eines Funkteilnehmeranschlußnetzes auf das die Erfindung angewendet wird.
Figur 2 die detaillierte Darstellung einer dezentralen konzentrierenden Einheit eines solchen Anschlußnetzes.
Figur 3 ein Zeitdiagramm der für die Basisstationen eines solchen Anschlußnetzes maßgeblichen Zeitrahmen.

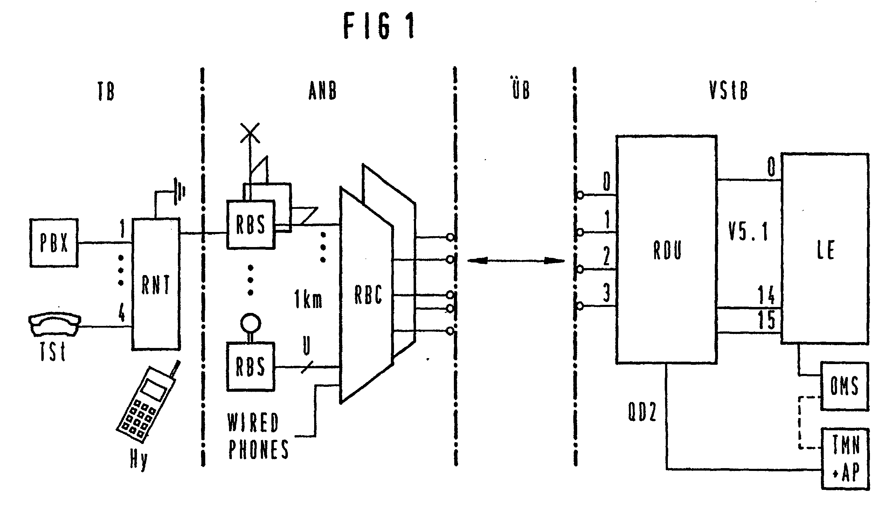

Das Funkteilnehmeranschlußnetz gemäß Figur 1 ist gegliedert in einen Vermittlungsstellenbereich VStB, einen Übertragungsbereich ÜB, einen Anschlußbereich ANB und einen Teilnehmerbereich TB. Als Teilnehmer, die an eine Fernmeldevermittlungsstelle LE des Vermittlungsstellenbereichs VStB angeschlossen sind, können, wie in TB dargestellt, Nebenstellenanlagen PBX oder private Teilnehmerstationen TSt vorgesehen sein, die über Zweidrahtleitungen an ortsfeste Teilnehmeranschlußeinheiten RNT angeschlossen sind. Zwischen solchen Teilnehmeranschlußeinheiten RNT und zum Anschlußbereich ANB gehörenden Funkbasisstationen RBS besteht eine Funkverbindung, die eine Entfernung in der Größenordnung von einigen Kilometern überbrückt. Es kommen auch mobile Teilnehmerstationen HY in Frage, die direkt mit den erwähnten Basisstationen RBS in Funkverbindung treten können.

Die Basisstationen RBS sind in Gruppen, im dargestellten Fall in zwei Gruppen, zusammengefaßt, indem sie über Zweidrahtleitungen und eine U-Schnittstelle U an konzentrierende dezentrale Einheiten RBC1 oder RBC2 des Anschlußnetzes angeschlossen sind. Diese dezentralen Einheiten konzentrieren jeweils den von den angeschlossenen Basisstationen stammenden Verkehr auf wenigstens eine Übertragungsstrecke, die Bestandteil des Bereichs ÜB ist und auf der Informationsübertragungen mit einer Bitrate von 2 Mbit/s erfolgen. Bei diesen Übertragungsstrecken handelt es sich um Richtfunkstrecken oder auch um Lichtleiterstrecken oder in Fällen, in denen nur relativ kurze Entfernungen bis zur Fernmeldevermittlungsstelle LE zu überbrücken sind, um Kupferleitungen. Im Nahbereich der Fernmeldevermittlungsstelle, also in dem erwähnten Vermittlungsstellenbereich VStB ist als zentrale Einheit des Anschlußnetzes eine Funksteuereinheit RDU angeordnet. Zwischen der zentralen Einheit RDU und der Fernmeldevermittlungsstelle LE bestehen über V5-Schnittstellen Zweidrahtleitungsverbindungen.

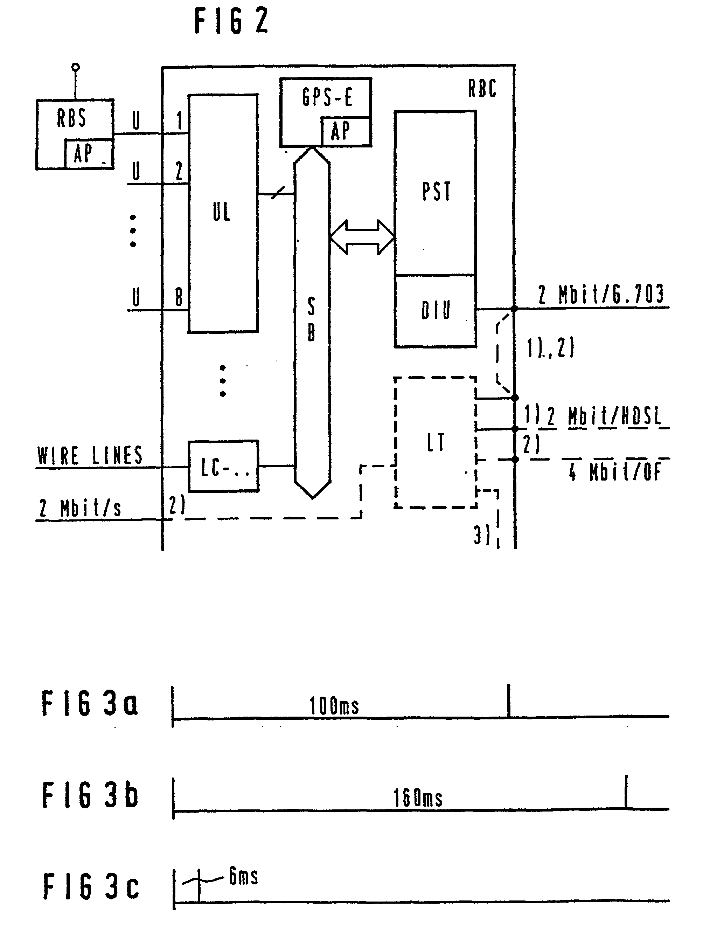

Die dezentralen Einheiten RBC weisen, wie die Figur 2 zeigt, erfindungsgemäß einen Empfänger GPS-E für die von Satelliten ausgestrahlten Bezugssignale eines Funkortungssystems, vorzugsweise des vorerwähnten GPS-Systems auf. Eine Funktionseinheit PST dieser Einheit RBC leitet aus den vom Empfänger entsprechend der Bezugssignale gelieferten Takt- und Zeitsignalen Zeitsignale für die Zeitmultiplex-Funkrahmen der Basisstationen RBS ab. Diese Zeitsignale werden über einen Systembus SB und eine zur U-Schnittstelle gehörende Schnittstellenheit UL an die angeschlossenen Basisstationen RBS gegeben.

Je nach Typ des GPS-Empfängers kann dessen Anbindung an die Funktionseinheit PST auch über eine serielle Schnittstelle erfolgen. Die Funktionseinheit führt dann über diese Schnittstelle auch Einstell- und Überwachnungsfunktonen für den GPS-Empänger GPS-E durch. Sie liest dabei auch die "Universal Time", welche mit der nächstfolgenden Zeitmarke, die der GPS-Empfänger abgibt, erreicht ist.

In der Figur 2 sind als Bestandteil der Einheit RBC noch eine Schnittstelle DIU für den Anschluß der Übertragungsstrecke des Übertragungsbereichs ÜB sowie Schnittstellenschaltungen LC für den Teilnehmeranschluß über Kupferleitungen, z.B. ISDN- Basisanschluß angedeutet. Ferner zeigt die Figur noch eine Schnittstelleneinheit LT für den direkten Anschluß der Einheit RBC über 2 Mbit/s-Leitungen, die je nach Natur der Übertragungsstrecke des Übertragungsbereichs ÜB eine elektrische oder eine optische Schnittstelle darstellen.

In Figur 3 sind die für die Basisstationen RBS maßgeblichen Zeitrahmen gezeigt. Es sind dies gemäß Zeile a) ein Abtastrahmen für die Zeitmultiplexkanäle des Funksystems, der beispielsweise 100 ms umfaßt, gemäß Zeile b) ein Signalisierungsrahmen von beispielsweise 160 ms und gemäß Zeile c) ein für interne Zwecke der Basisstation benutzter Zeitrahmen von beispielsweise 6 ms.

Durch die von dem Bezugssignal des Funkortungssystems abgeleiteten Zeitsignale wird nun eine Synchronität der Zeitverhältnisse der Basisstationen RBS bezüglich des kleinsten gemeinsamen Vielfachen der erwähnten Zeitrahmen hergestellt, das im betrachteten Fall 2400 ms beträgt.

Da die über die U-Schnittstellen führenden Verbindungsleitungen zwischen den Basisstationen RBS und den dezentralen Einheiten RBC des Anschlußnetzes unterschiedlich sind, muß eine Berücksichtigung von Laufzeitunterschieden stattfinden. Erfindungsgemäß geschieht dies dadurch, daß den in den Basisstationen maßgeblichen Zeitmultiplex-Funkrahmen, also den Rahmen gemäß Zeile a) in Figur 3, ein entsprechendes Zeit-Offset gegeben wird. Eine Grobeinstellung dieses Zeit-Offset erfolgt in den dezentralen Einheiten RBC, wozu die dort vorgesehenen Empfänger GPS-E eine entsprechende Anpaßschaltung AP aufweisen, die Feineinstellung erfolgt dann in den Basisstationen RBS, die ebenfalls eine entsprechende Anpaßschaltung aufweisen. Damit ist es möglich, daß z.B. zwei Betreiber ihre Netze im Funkbereich synchronisieren und damit die Interferenz minimieren.

## Patentansprüche

1. Anordnung zur Synchronisierung der Funkinformationsübertragung in einem Funkteilnehmeranschlußnetz für den Anschluß an eine Fernmeldevermittlungsstelle (LE),
das aus einer bezüglich des Funkteilnehmeranschlußnetzes zentralen, der Steuerung eines Funksystems im Funkteilnehmeranschlußnetz dienenden Einheit (RDU), zumindest einer bezüglich des Funkteilnehmeranschlußnetzes dezentralen Einheit (RBC), sowie einer Mehrzahl von an diese wenigstens eine dezentrale Einheit (RBC) angeschlossenen Basisstationen (RBS) besteht,
wobei zwischen den Basisstationen (RBS) und Teilnehmerstationen die Funkinformationsübertragung stattfindet und
wobei jede dezentrale Einheit (RBC) einen Empfänger (GPS-E) für die von Satelliten ausgestrahlten Bezugssignale eines Funkortungssystems enthält,
**dadurch gekennzeichnet,**
**daß** jede dezentrale Einheit (RBC) den von den angeschlossenen Basisstationen stammenden Verkehr (RBS) auf wenigstens eine Übertragungsstrecke (ÜB) zur zentralen Einheit (RDU) konzentriert,
**daß** die Basisstationen (RBS) an die wenigstens eine dezentrale Einheit (RBC) über eine U-Schnittstelle (U) angeschlossen sind,
**daß** jede dezentrale Einheit (RBC) aus den von Satelliten ausgestrahlten Bezugssignalen eines Funkortungssystems Zeitsignale für die Zeitmultiplex-Funkrahmen der Basisstationen (RBS) ableitet, die sie über die U-Schnittstelle (U) an die Basisstationen (RBS) sendet und
**daß** der Empfänger (GPS-E) der dezentralen Einheiten (RBC) eine Anpaßschaltung (AP) zur Grobeinstellung eines Zeit-Offset für den Startzeitpunkt des Zeitmultiplex-Funkrahmens enthält.

2. Anordnung nach Anspruch 1,
**dadurch gekennzeichnet, daß** die Basisstationen (RBS) eine Anpaßschaltung für die Feineinstellung des Zeit-Offsets für den Startzeitpunkt des Zeitmultiplex-Funkrahmens aufweisen.

3. Anordnung nach Anspruch 1 oder 2,
**dadurch gekennzeichnet, daß** das Funkortungssystem das Global Positioning System (GPS) ist.

4. Anordnung nach einem der vorhergehenden Ansprüche,
**dadurch gekennzeichnet, daß** die Empfänger (GPS-E) der dezentralen Einrichtungen (RBC) aus dem empfangenen Bezugssignal des Funkortungssystems auch Zeitsignale für die in ihnen enthaltenen Baugruppen ableiten.

## Claims

1. Arrangement for synchronization of the radio information transmission in a radio subscriber access network for connection to a telecommunications switching centre (LE),
which comprises a unit (RDU) which is central with respect to the radio subscriber access network and is used for controlling a radio system in the radio subscriber access network, at least one unit (RBC) which is decentralized with respect to the radio subscriber access network, as well as a number of base stations (RBS) which are connected to this at least one decentralized unit (RBC),
with the radio information transmission taking place between the base stations (RBS) and the subscriber stations, and
with each decentralized unit (RBC) containing a receiver (GPS-E) for the reference signals, transmitted from satellites, in a radio positioning system,
**characterized**
**in that** each decentralized unit (RBC) concentrates the traffic (RBS) which originates from the connected base stations onto at least one transmission path (ÜB) to the central unit (RDU),
**in that** the base stations (RBS) are connected to the at least one decentralized unit (RBC) via a U interface (U),
**in that** each decentralized unit (RBC) derives time signals for the time division multiplex radio frames of the base stations (RBS) from the reference signals, which are transmitted by satellites, in a radio positioning system, and transmits these time signals via the U interface (U) to the base stations (RBS), and
**in that** the receiver (GPS-E) for the decentralized units (RBC) contains a matching circuit (AP) for coarse setting of a time offset for the start time of the time division multiplex radio frame.

2. Arrangement according to Claim 1,
**characterized in that** the base stations (RBS) have a matching circuit for fine setting of the time offset for the start time of the time division multiplex radio frame.

3. Arrangement according to Claim 1 or 2,
**characterized in that** the radio positioning system is the global positioning system (GPS).

4. Arrangement according to one of the preceding claims,
**characterized in that** the receiver (GPS-E) for the decentralized devices (RBC) also derive time signals for the assemblies contained in them, from the received reference signal in the radio positioning system.

## Revendications

1. Dispositif de synchronisation de transmission radio d'informations dans un réseau radio de raccordement d'abonnés pour le raccordement à un central de télécommunication (LE),
qui est constitué d'une unité (RDU) centrale par rapport au réseau radio de raccordement d'abonnés, servant à la commande d'un système radio dans le réseau radio de raccordement d'abonnés, au moins d'une unité (RBC) décentralisée par rapport au réseau radio de raccordement d'abonnés, ainsi que d'une pluralité de stations de base (RBS) connectées à cette au moins une unité (RBC) décentralisée,
la transmission radio des informations ayant lieu entre les stations de base (RBS) et les stations des abonnés, et
chaque unité (RBC) décentralisée comprenant un récepteur (GPS-E) pour les signaux de référence d'un système de radiolocalisation émis par des satellites,
**caractérisé en ce que**
chaque unité (RBC) décentralisée concentre le trafic (RBS) en provenance des stations de base connectées sur au moins un trajet de transmission (UB) vers l'unité (RDU) centrale,
**en ce que** les stations de base (RBS) sont connectées à l'au moins une unité (RBC) décentralisée par l'intermédiaire d'une interface en U (U),
**en ce que** chaque unité (RBC) décentralisée dérive des signaux de temps pour la trame radio de multiplexage par répartition dans le temps des stations de base (RBS) à partir des signaux de référence d'un système de radiolocalisation émis par des satellites, qu'elle émet aux stations de base (RBS) par l'intermédiaire de l'interface en U (U), et
**en ce que** le récepteur (GPS-E) des unités (RBC) décentralisées contient un circuit d'adaptation (AP) pour le réglage grossier d'un décalage de temps pour le moment de départ de la trame radio de multiplexage par répartition dans le temps.

2. Dispositif selon la revendication 1,
**caractérisé en ce que** les stations de base (RBS) présentent un circuit d'adaptation pour le réglage de précision du décalage de temps pour le moment de départ de la trame radio de multiplexage par répartition dans le temps.

3. Dispositif selon la revendication 1 ou 2,
**caractérisé en ce que** le système de radiolocalisation est le Global Positioning System (GSP).

4. Dispositif selon l'une des revendications précédentes,
**caractérisé en ce que** les récepteurs (GPS-E) des dispositifs (RBC) décentraux dérivent également des signaux de temps pour les sous-groupes contenus dans eux à partir du signal de référence du système de radiolocalisation.
